# EUROPÄISCHE PATENTSCHRIFT

(11) **EP 0 780 004 B1**
(45) Veröffentlichungstag und Bekanntmachung des Hinweises auf die Patenterteilung: **25.11.1998**
(21) Anmeldenummer: 95929751.6
(22) Anmeldetag: 05.09.1995
(51) Int. Cl.: G06K 19/077

(54) **SCHALTUNGSANORDNUNG MIT EINEM CHIPKARTENMODUL UND EINER DAMIT VERBUNDENEN SPULE**
CIRCUIT WITH A CHIP CARD MODULE AND A COIL CONNECTED THEREWITH
CIRCUIT AVEC MODULE SOUS FORME DE CARTE A PUCE CONNECTE A UNE BOBINE

(30) Priorität: 05.09.1994 DE 4431604
(43) Veröffentlichungstag der Anmeldung: 25.06.1997
(73) Patentinhaber: SIEMENS AKTIENGESELLSCHAFT, 80333 München (DE)
(72) Erfinder: HOUDEAU, Detlef, D-84085 Langquaid (DE); MUNDIGL, Josef, D-93182 Duggendorf (DE)
(86) Internationale Anmeldenummer: DE9501199
(87) Internationale Veröffentlichungsnummer: WO9607982

(56) Entgegenhaltungen:
- EP-A- 0 254 640
- EP-A- 0 520 682
- WO-A-92/17866
- DE-A- 4 105 869
- DE-A- 4 212 808

## Beschreibung

Die Erfindung betrifft eine Schaltungsanordnung mit einem planaren, zumindest zwei Kontaktfahnen umfassenden, ein Leadframe bildenden Träger, auf dem ein Halbleiterchip angeordnet und mit den voneinander isolierten Kontaktfahnen des Leadframes elektrisch leitend verbunden ist, und einer Spule.

Eine solche Schaltungsanordnung zeigt die EP 0 254 640 Bl. Dort sind in eine Metallfläche Ausnehmungen gestanzt, die Kontaktbereiche definieren, die nur über einen Rahmen aneinander hängen und als Leadframe bezeichnet werden. Auf einen mittleren Kontaktbereich ist ein Halbleiterchip angeordnet, der mittels Bonddrähten mit den anderen Kontaktbereichen leitend verbunden ist. Die Anordnung wird derart mit Kunstharz vergossen, daß nur die nach außen weisenden Teile der Kontaktbereiche als Kontaktfahnen frei bleiben und durch Entfernen des haltenden Rahmens voneinander isoliert werden und zur Kontaktierung des Halbleiterchips dienen können.

Bei der bekannten Schaltungsanordnung wird die zur Versorgung des Halbleiterchips nötige Energie sowie der Datenfluß von und zum Halbleiterchip über die Kontaktfahnen mittels mechanischer Kontakte abgewickelt.

Aus der DE 41 15 065 C2 ist beispielsweise eine Einrichtung zur berührungslosen Daten- und Energieübertragung bekannt. Dort ist der Halbleiterchip mit zwei Spulen verbunden, über die berührungslos, beispielsweise durch transformatorische Übertragung, Daten und Energie übermittelt werden.

Auch die WO92/17866 zeigt eine Einrichtung zur berührungslosen Daten- und Energieübertragung bei der jedoch ein Ende einer Spule mittels Durchkontaktierungen die Windungen der Spule kreuzt.

In gleicher Weise zeigt die EP 0 520 682 A1 eine kontaktlose Datenkarte mit einer planaren Spule, deren Windungen von einem Spulenende zur Verbindung mit gedruckten Leiterbahnen gekreuzt wird.

Solche Chipkarten mit darin enthaltenen Schaltungsanordnungen mit Spulen werden in großen Stückzahlen gefertigt. Es ist daher nötig, ein schnelles, billiges und automatisierbares Verfahren zu ihrer Fertigung anzuwenden, wozu es allerdings notwendig ist, einen geeigneten Aufbau der Schaltungsanordnung zu verwenden.

Analysen bisheriger Konzepte mit berührungslosen Chipkarten haben ergeben, daß dort die Enden der Spule auf beliebige Weise zu Anschlußpunkten beim Halbleiterchip spulenüberkreuzt geführt werden, was jedoch für eine Automatisierbarkeit nachteilig ist, da dabei ein Spulenende die Spule an irgendeiner Stelle überkreuzt. Eine solche, in der Dicke aufbauende Spule ist ungünstig, da die Kartendecklagen die ungünstigen Höhenniveaus ausgleichen müssen, was u.U. zu starken Formänderungen der PVC-Kunststoffolien führt. Da die Decklagen im allgemeinen mit einem für den Benutzer sichtbaren Druckbild versehen sind, also ein Design-Teil darstellen, können lokale Verformungen im Bereich der undefiniert liegenden Spulenkreuzungspunkte zu unerwünschten Druckbild-Verzerrungen führen.

Die Aufgabe der Erfindung ist es daher, eine Schaltungsanordnung für eine kontaktlose Chipkarte anzugeben, die einfach, kostengünstig und leicht automatisierbar herzustellen ist.

Die Aufgabe wird gelöst durch eine Schaltungsanordnung gemäß dem Anspruch 1. Vorteilhafte Weiterbildungen sind in den Unteransprüchen angegeben.

Durch die erfindungsgemäße Schaltungsanordnung ist es nicht nötig, daß ein Spulenende die Wicklung der planaren Spule, also einer Spule, bei der sich die Windungen nicht überlappen, sondern nebeneinander liegen, kreuzen muß, so daß es keine undefinierte Lage einnehmen kann. Eine klare, geometrisch definierbare Feldlinienausbildung auch im Bereich der Spulenenden kann somit erreicht werden.

Die nötige Überbrückung erfolgt mittels der längeren der beiden Kontaktfahnen der Schaltungsanordnung.

In vorteilhafter Weise können die Enden der Kontaktfahnen verbreitert sein, so daß eine leichtere Verbindung zwischen Spulenenden und Kontaktfahnen möglich ist.

Die Spule hat üblicherweise eine Querschnittsfläche, die annähernd den Abmessungen einer Chipkarte entspricht. Vorzugsweise kann der Halbleiterchip in einer Ecke der Spule und damit der Chipkarte angeordnet werden, wo die Biegebelastung für den IC am geringsten ist. Hierbei ist es besonders vorteilhaft, wenn die beiden Kontaktfahnen senkrecht zueinander angeordnet sind.

Die Erfindung wird nachfolgend anhand von Ausführungsbeispielen mit Hilfe von Figuren näher erläutert. Dabei zeigen:
- Figur 1: die Seitenansicht einer in Leadframe-Technik und mit Kunstharz vergossenen Schaltungsanordnung,
- Figur 2: die Draufsicht auf eine Schaltungsanordnung nach Figur 1;
- Figur 3: die Seitenansicht einer in Leadframe-Technik und mit Kunstharz vergossenen Schaltungsanordnung mit senkrecht zueinander zugeordneten Kontaktfahnen; und
- Figur 4: die Draufsicht auf eine Schaltungsanordnung gemäß Figur 3.

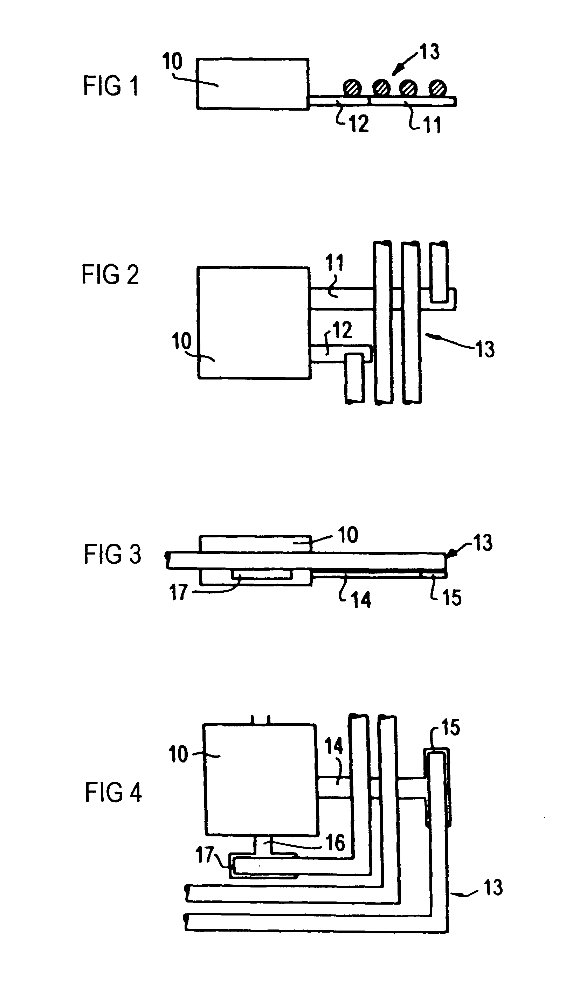

Die Figuren 1 bis 4 zeigen Ausführungsformen einer erfindungsgemäßen Schaltungsanordnung in Leadframe-Technik. Hierbei sind ein nicht dargestellter Halbleiterchip sowie Kontaktbereiche in einem Gehäuse 10 vergossen. Gemäß Figur 1 und 2 stehen zwei parallel verlaufende Kontaktfahnen 11 und 12, wobei eine von ihnen 11 länger ist als die andere 12. Figur 1 zeigt dabei eine Seitenansicht und Figur 2 eine Draufsicht auf eine solche Schaltungsanordnung. Dort sind außerdem Spulenwindungen 13 einer planaren Spule zu sehen. Wie deutlich zu sehen ist, kann die Spule aufgrund der erfindungsgemäßen unterschiedlichen Längen der Kontaktfahnen überkreuzungsfrei ausgeführt werden.

Figur 3 zeigt eine Seitenansicht und Figur 4 eine Draufsicht auf eine weitere Ausführungsform in Leadframe-Technik einer erfindungsgemäßen Schaltungsanordnung. Aus einem Gehäuse 10, in dem ein Halbleiterchip sowie die dazugehörigen Kontaktbereiche vergossen sind, stehen zwei Kontaktfahnen 14, 16 hervor, die senkrecht zueinander angeordnet sind. Sie weisen dabei verbreiterte Enden 15 bzw. 17 auf, an denen die Enden einer Spule 13 befestigt, z. B. gelötet werden können. Durch diese Ausgestaltung einer Schaltungsanordnung ist es besonders einfach möglich, sie in einer Ecke der Spule anzuordnen.

## Patentansprüche

1. Schaltungsanordnung mit einem planaren, zumindest zwei Kontaktfahnen (11, 12; 14, 16) umfassenden, ein Leadframe bildenden Träger, auf dem ein Halbleiterchip angeordnet und mit den voneinander isolierten Kontaktfahnen (11, 12; 14, 16) des Leadframes elektrisch leitend verbunden ist, und einer Spule (13)
**dadurch gekennzeichnet,**
daß zumindest zwei der Kontaktfahnen (11, 12; 14, 16) zur Verbindung des Halbleiterchips mit den zwei Enden der Spule (13) dienen, und wobei diese beiden Kontaktfahnen (11, 12; 14, 16) unterschiedliche Längen aufweisen, so daß keines der Spulenenden die Spulenwicklung (13) kreuzen muß.

2. Schaltungsanordnung nach Anspruch 1, **dadurch gekennzeichnet,**
daß die Enden der Kontaktfahnen (14, 16)einen großflächigen Kontaktbereich (15, 17) bilden.

3. Schaltungsanordnung nach einem der Ansprüche 1 oder 2,
**dadurch gekennzeichnet,**
daß der Halbleiterchip (3) und die Verbindungen mit den Kontaktfahnen von einer schützenden Kunststoffmasse (10) umgeben sind.

4. Schaltungsanordnung nach einem der Ansprüche 1 bis 3,
**dadurch gekennzeichnet,**
daß die Spule (13) eine im wesentlichen rechteckige Form aufweist.

5. Schaltungsanordnung nach Anspruch 4,
**dadurch gekennzeichnet,**
daß der Halbleiterchip (3) in einer Ecke der Spule (13) angeordnet ist.

6. Schaltungsanordnung nach einem der Ansprüche 1 bis 5,
**dadurch gekennzeichnet,**
daß die zumindest zwei Kontaktfahnen (11, 12) parallel zueinander angeordnet sind.

7. Schaltungsanordnung nach einem der Ansprüche 1 bis 5,
**dadurch gekennzeichnet,**
daß die zumindest zwei Kontaktfahnen (14, 16) senkrecht zueinander angeordnet sind.

8. Schaltungsanordnung nach einem der Ansprüche 1 bis 5 **dadurch gekennzeichnet,**
daß die zumindest zwei Kontaktfahnen an gegenüberliegenden Seiten des Halbleiterchips angeordnet sind.

## Claims

1. Circuit arrangement having a planar carrier which includes at least two contact lugs (11, 12; 14, 16) and forms a lead frame and on which a semiconductor chip is arranged and is electrically conductively connected to the mutually insulated contact lugs (11, 12; 14, 16) of the lead frame, and having a coil (13), characterized in that at least two of the contact lugs (11, 12; 14, 16) are used to connect the semiconductor chip to the two ends of the coil (13), and these two contact lugs (11, 12; 14, 16) having different lengths, with the result that none of the coil ends has to cross the coil winding (13).

2. Circuit arrangement according to Claim 1, characterized in that the ends of the contact lugs (14, 16) form a large-area contact region (15, 17).

3. Circuit arrangement according to either of Claims 1 and 2, characterized in that the semiconductor chip (3) and the connections to the contact lugs are surrounded by a protective plastics compound (10).

4. Circuit arrangement according to one of Claims 1 to 3, characterized in that the coil (13) has an essentially rectangular shape.

5. Circuit arrangement according to Claim 4, characterized in that the semiconductor chip (3) is arranged in a corner of the coil (13).

6. Circuit arrangement according to one of Claims 1 to 5, characterized in that the at least two contact lugs (11, 12) are arranged parallel to one another.

7. Circuit arrangement according to one of Claims 1 to 5, characterized in that the at least two contact lugs (14, 16) are arranged perpendicularly with respect to one another.

8. Circuit arrangement according to one of Claims 1 to 5, characterized in that the at least two contact lugs are arranged on opposite sides of the semiconductor chip.

## Revendications

1. Montage comportant un support planaire, qui comprend au moins deux oreilles (11, 12 ; 14, 16) de contact, qui forment une grille de connexion, sur lequel une puce à semi-conducteurs est disposée et dont les oreilles (11, 12 ; 14, 16) de contact, isolées l'une de l'autre, de la grille de connexion sont reliées de manière conductrice de l'électricité, et une bobine (13), caractérisé en ce qu'au moins deux des oreilles (11, 12 ; 14, 16) de contact servent à la liaison de la puce à semi-conducteurs avec les deux extrémités de la bobine (13), et ces deux oreilles (11, 12 ; 14, 16) de contact ayant des longueurs différentes, si bien qu'aucune des extrémités de bobine ne doit croiser l'enroulement (13) de bobine.

2. Montage suivant la revendication 1, caractérisé en ce que les extrémités des oreilles (14, 16) de contact forment une zone (15, 17) de contact de grande surface.

3. Montage suivant l'une des revendications 1 ou 2, caractérisé en ce que la puce (3) à semi-conducteurs et les liaisons avec les oreilles de contact sont entourées d'une composition (10) de matière plastique protectrice.

4. Montage suivant l'une des revendications 1 à 3, caractérisé en ce que la bobine (13) a une forme sensiblement rectangulaire.

5. Montage suivant la revendication 4, caractérisé en ce que la puce (3) à semi-conducteurs est montée à un coin de la bobine (13).

6. Montage suivant l'une des revendications 1 à 5, caractérisé en ce que les au moins deux oreilles (11, 12) de contact sont disposées parallèlement l'une à l'autre.

7. Montage suivant l'une des revendications 1 à 5, caractérisé en ce que les au moins deux oreilles (14, 16) de contact sont montées perpendiculairement l'une à l'autre.

8. Montage suivant l'une des revendications 1 à 5, caractérisé en ce que les au moins deux oreilles de contact sont disposées sur des côtés opposés de la puce à semi-conducteurs.
